# EUROPEAN PATENT SPECIFICATION

(11) **EP 2 773 528 B1**
(45) Date of publication and mention of the grant of the patent: **15.05.2019**
(21) Application number: 11875026.4
(22) Date of filing: 01.11.2011
(51) Int. Cl.: B60N 3/08, B60N 3/10, B60R 7/04, B60R 7/08

(54) **ATTACHMENT SYSTEM**
BEFESTIGUNGSSYSTEM
SYSTÈME D'ATTACHEMENT

(43) Date of publication of application: 10.09.2014
(73) Proprietor: Volvo Lastvagnar AB, 405 08 Göteborg (SE)
(72) Inventor: HERMANSEN, Annika, S-426 71 Våstra Frölunda (SE); BERNTSSON, Lennart, S-431 66 Mölndal (SE); MOUSAFIRIS, Antonios, S-414 57 Göteborg (SE)
(74) Representative: Volvo Technology Corporation
(86) International application number: PCT/SE2011/000198
(87) International publication number: WO 2013/066218

(56) References cited:
- EP-A1- 1 894 773
- WO-A1-2010/132394
- DE-A1-102010 025 876
- US-A- 5 125 518
- US-A1- 2008 047 911
- US-A1- 2008 067 828
- US-A1- 2011 109 129

## Description

### TECHNICAL FIELD

The present invention relates to an attachment system in a vehicle, which attachment system comprises interchangeable attachment devices arranged to be removably mounted adjacent an upright interior surface facing the passenger compartment.

### BACKGROUND ART

It is common practice for vehicle manufacturers to install various compartments for articles or dedicated article holders at convenient locations in a vehicle cab so that various kinds of articles are at hand and easily retrieved if needed while the vehicle is being operated. This is particularly true for truck drivers who while driving may want to retrieve articles such as a package of cigarettes, a snack, a drinking bottle, a note pad or similar, without having to divert the driver's attention to a glove box, side door pocket, or other less conveniently accessed place where a needed article was stored. Commonly used article holders for various accessories, drinking bottles, coffee cups or similar can be mounted on the door adjacent the driver, on the dashboard or on an arm rest between the front seats.

A problem relating to known solutions is that the location of the article holder is determined by the vehicle manufacturer, which location is fixed and may not always be ideal for the user.

This invention aims to solve these problems by providing an improved attachment system for storing or supporting articles.

According to its abstract, US 2008/0047911 A1 discloses a suspension display rack which has a board, a rail, and multiple brackets. The board has a back-strip. The back-strip has two first positioning holes. The rail is mounted on a front surface of the board and has an upper lug and a lower lug formed respectively on a top and a bottom of the rail. The brackets are mounted on the rail and each bracket has a bar engaging with the board, a holder and a seat. When the board is mounted securely on a wall or a tool car, tools can connect to the seats of the brackets for positioning.

According to its abstract, WO 2010/132394 A1 discloses a storage and/or organization system which may be used to store and/or organize various items. For example, the system may include one or more panels and one or more attachment members, which may be connected to the panels and may be used to hold and/or position various items in desired locations. The attachment members may be selectively connected to and/or removed from the panels to provide a variety of storage and organization solutions. The panels may include, for example, one or more receiving portions to which the attachment members may be connected to and/or disconnected from using a snap, friction and/or interference fit. One or more portions of the panels and/or the attachment members may deform and/or deflect to provide the snap, friction and/or interference. One or more portions of the panels and/or the attachment members may remain deformed and/or deflected to provide a tension fit.

### DISCLOSURE OF INVENTION

The invention relates to an attachment system in a vehicle and interchangeable attachment devices for said system, according to the appended claims.

As defined by the features of claim 1, the invention relates to an attachment system in a vehicle, which attachment system comprises interchangeable attachment devices arranged to be removably mounted adjacent an upright interior surface facing the passenger compartment. Each interchangeable attachment device comprises a front portion arranged for supporting an accessory associated with the attachment device. Examples of accessories that can be fixedly or removably attached to the attachment device are different types of holders for beverage containers (cups, bottles), a holder for magazines, a holder for rubbish bags, a litter bin with a closable lid, a coffee maker, a foldable shelf, or similar accessories which are desirable to be within easy reach for a driver or a passenger.

The attachment system comprises at least two spaced apart parallel tracks each arranged in at least a first and a second surface angled away from the upright interior surface and a corresponding number of projections arranged on each attachment device. A first and a second track comprises open grooves extending into said first and a second surface, respectively, from opposite directions. In this context, the wording "opposite directions" is intended to define that the planes located in the main direction of the respective groove are arranged to be either coinciding or parallel, or to intersect at an obtuse angle.

The attachment device comprises at least a first projection for cooperating with said first track and at least a second projection for cooperating with said second track. An attachment device and its associated accessory is arranged to be slidable in a horizontal direction along said upright interior surface. In order to achieve this, the cooperating projections and grooves forming the tracks have profiled cross-sections which are at least partially form fitting. The cooperating shapes of the tracks and projections are made with a tolerance or individual clearance that allows the attachment device to slide easily along the front of the upright surface. When placed in a desired position, the attachment device can be retained by friction, by a spring loaded device, by a spring loaded indexing device, or a similar suitable arrangement. For instance, a spring loaded indexing device such as a resilient portion on a portion of one of the projections is arranged in contact with a facing contact surface in the corresponding groove. The contact surface in the groove can be provided with a number of locating elements, such as beads extending out of said surface or depressions extending into said surface. When the attachment device is displaced into a desired position by a user, the spring loaded indexing device is pulled past the locating elements. When located in said position, the attachment device is prevented from being moved out of position by the interaction between the indexing device and the adjacent locating elements. In this way the attachment device will remain in position when subjected to external forces, such as vibrations.

In order to slide the attachment device along the front of the upright surface, the user is preferably, but not necessarily, required to use both hands for gripping and moving the attachment device. The reason for this is that positioning of the attachment device requires that the friction and/or retaining forces holding the attachment device in place must be overcome at the same time as it is necessary to avoid wedging of the projections in the grooves. This is sometimes referred to as a "drawer effect". By using both hands to slide the attachment device, wedging is avoided and the user can easily slide the attachment device along the upright interior surface to re-position, replace or remove the attachment device.

The tracks are arranged to extend over the entire width of the upright interior surface. The projections on the attachment device can have a width that is dependent on the size or width of the attachment device or on the weight of the accessory. Hence, the projection can extend over the entire width of the attachment device or over a limited part thereof. For instance, a first and a second projection can be located at a central part of the attachment device and have an extension corresponding to at least a quarter of the total width of the attachment device. According to a further example, a pair of first and second projections can be located at opposite ends of the attachment device and each have combined extension corresponding to at least a quarter of the total width of the attachment device. Any combination of single or multiple first and second projections having predetermined widths can be selected, depending on factors such as the use of the attachment device, the weight of the accessory and the available width of the tracks.

The number of attachment devices that can be mounted at any time is dependent on the width of the respective attachment device and the total length of the tracks from end to end. Hence, the attachment system can comprise a single attachment device or multiple attachment devices mounted side-by-side in the parallel tracks. The interchangeable feature of the system will give the occupants of the vehicle a free choice of which attachment devices and accessories to use, and in which order they are mounted. Each attachment device can have an individual or a standardized fixture for supporting an accessory. An individual fixture is adapted to one accessory that can be fixed or removable from the attachment device. A standardized fixture can be adapted to accept any accessory with a fitting matching this particular fixture. The latter feature will allow accessories to be replaced without removing the attachment device.

As stated above, the at least two spaced apart parallel tracks are arranged in at least a first and a second surface angled away from the upright interior surface. A suitable angle for the first and second surfaces relative to a plane in or in the main direction of the upright interior surface is 90° ± 45°. In this way, any one of the at least two spaced apart parallel tracks is arranged behind a plane in said upright interior surface, or at least behind the main extension of said upright interior surface.

All the spaced apart parallel tracks are arranged to open up at at least one end, in a common side surface connecting said first and second surfaces. The projections on each interchangeable attachment device in the attachment system are arranged to be slid into or out of the open ends of said parallel tracks, in order to mount or remove an attachment device adjacent an upright interior surface.

The attachment system as described above comprises interchangeable attachment devices with said front portion extending in parallel, and preferably out of contact, with the upright interior surface. Said attachment devices comprise an upper portion, which supports the first projection, and at least one lower portion, which supports the second projection. The upper and lower portions extend from the respective upper and lower parts of the front portion, past the plane in the upright interior surface and substantially in parallel with the first and second surfaces in which the tracks and their associated grooves are arranged.

According to a further example, the front portion can comprise an intermediate portion which supports a third projection for cooperating with a third track in a third surface angled away from the upright interior surface. The intermediate portion is arranged between the upper and lower portions and can be used to provide additional stability for the attachment device and/or for preventing the rear surface of the front portion from coming into contact with the upright interior surface.

The first and a third track comprises open grooves extending into said first and a third surface, respectively. The use of three tracks can improve collision safety and provide improved guidance of the attachment device in the tracks, which reduces the risk of wedging. According to one example, the first and the third tracks can extend into said surfaces from opposite directions. The third surface can be located in a horizontal recess in the upright interior surface. Such a horizontal recess can for instance by a part of a handle portion used for opening and closing a drawer, a hatch or a similar storage device. This recess would extend across a major portion of the storage device, wherein the first, second and third tracks would have the same length. The attachment system as described above can also form part of a wall or dashboard structure in the vehicle interior. According to the invention, the attachment system comprises a storage unit and the upright interior surface comprises a front section of the storage unit. The storage unit comprises at least one drawer, depending on the available space. The storage unit can for instance comprise two adjacent drawers. An advantage of mounting an attachment device on the front of a drawer is that one end of each of the parallel tracks is arranged to be exposed when one such drawer is withdrawn, in order to allow said interchangeable attachment device to be mounted or removed. Consequently, the attachment device is prevented from being removed when the drawer is pushed in.

The invention further relates to an interchangeable attachment device arranged to be used in an attachment system as described above. As described above, the interchangeable attachment device comprises a front portion having a fixture for supporting an accessory associated with the attachment device. Further, the attachment device comprises at least two spaced apart parallel projections arranged on each attachment device. Said attachment device comprises at least a first and at least a second projection extending towards each other, and arranged to cooperate with corresponding tracks in the attachment system. When mounted, the attachment device and its associated accessory is arranged to be slidable in a horizontal direction towards or away from a seated occupant.

Said front portion of the interchangeable attachment device comprises an upper portion, which supports the first projection, and a lower portion, which supports the second projection. The front portion comprises an intermediate portion which comprises a third projection arranged to cooperate with a corresponding third track in the attachment system, and where the first and the third projections extend towards each other.

One advantage of the attachment system according to the invention is that it provides easy access to a range of equipment/accessories for the driver and the passenger. Tracks integrated in storage devices comprising a drawer, a hatch or similar, provides a possibility for mounting a range of accessories in different positions for a customized vehicle interior. For instance, the attachment system can be located on the front surface of a storage compartment located under a bed located behind the front seats or under a raised floor section extending forward from the sleeping/living compartment to a position between the drivers seat and the passenger seat.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a plan view of a cross-section through a vehicle cab provided with an attachment system according to the invention;
- Figure 2: shows a perspective front view of an attachment system according to one example of the invention;
- Figure 3: shows a perspective front view of a part of the attachment system in Figure 2;
- Figure 4: shows a perspective rear view of the cooperation portions of the attachment system in Figure 2;
- Figure 5: shows a perspective front view of an attachment system comprising an attachment device with a replaceable accessory;
- Figure 6: shows a cross-section through the attachment system in Figure 5 with the accessory removed;
- Figure 7: shows a cross-section through the attachment system in Figure 5 with the accessory attached.

### EMBODIMENTS OF THE INVENTION

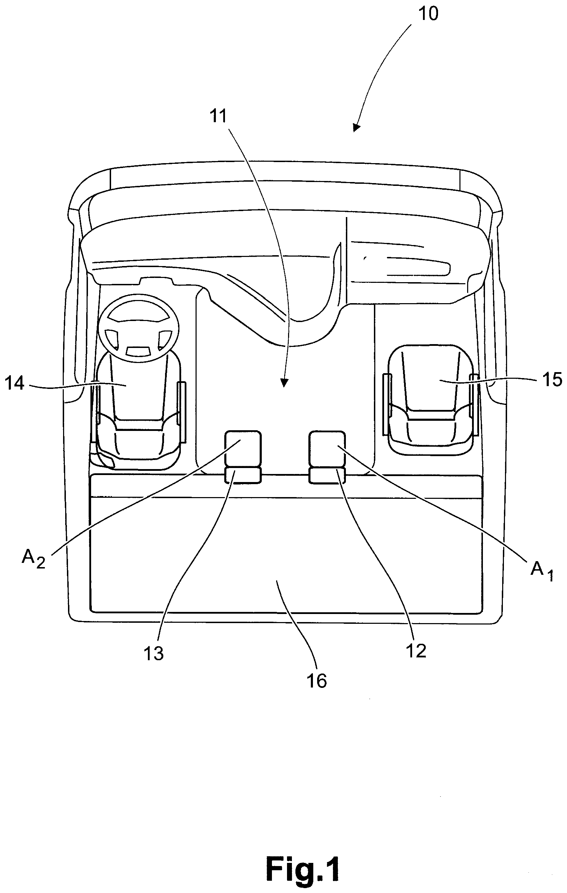

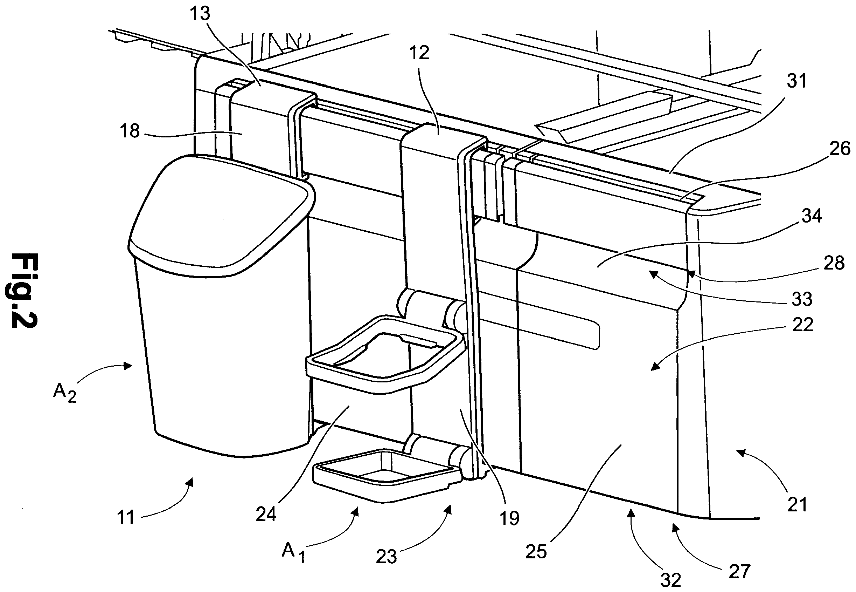

Figure 1 shows a plan view of a cross-section through a vehicle cab 10 provided with an attachment system 11 according to the invention. The attachment system 11 shown in Figure 1 is provided with accessories A1, A2 of the type shown in Figure 2. The respective accessory A1, A2 is attached by means of an attachment device 12, 13. The cab 10 comprises a drivers seat 14, a passenger seat 15 and a sleeping/living compartment 16 located behind said seats 14, 15. The attachment system 11 is located on the front surface of a storage compartment (see Figure 2) located under a bed 16 located behind the front seats behind the drivers seat 14 and the passenger seat 15. Each respective accessory A1, A2 is attached to a resepective front portion 18, 19 of the attachment devices 12, 13.

Figure 2 shows a perspective front view of an attachment system 11 according to one example of the invention. The attachment system 11 in this figure is located between the front seats 14, 15 as shown in Figure 1. In this example, the attachment system 11 forms part of a storage unit 21 with an upright interior surface 22 comprising a front section 23 of the storage unit. The storage unit 21 extends in the longitudinal direction of the vehicle and comprises two adjacent drawers 24, 25 which can be pulled out individually or simultaneously. Each drawer is provided with releasable locking means (not shown) arranged to prevent the respective drawer from being pulled out unless said locking means is released by the user.

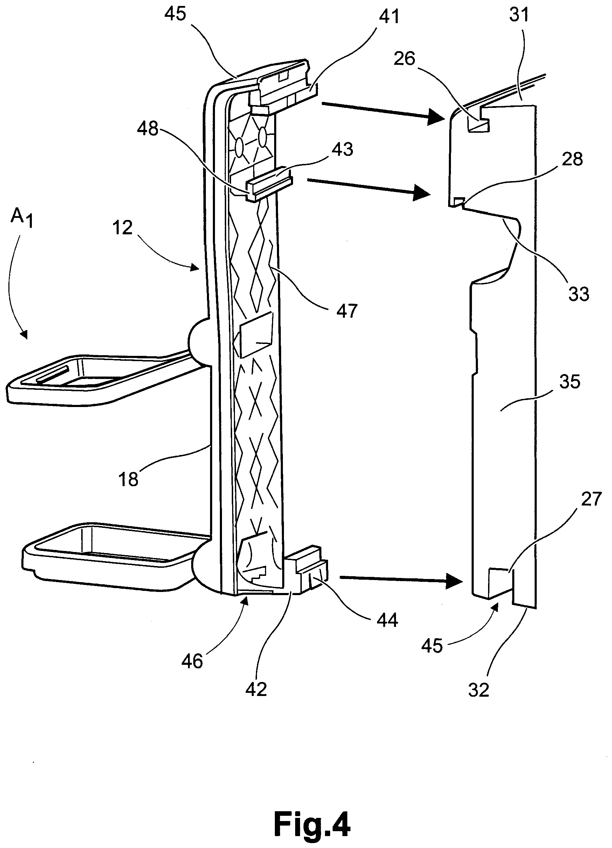

The attachment system 11 shown in Figure 2 comprises three spaced apart parallel tracks 26, 27, 28 each arranged in a respective surface 31, 32, 33 angled away from the upright interior surface 22. A corresponding number of projections (see Figure 4) are arranged on each attachment device 12, 13. The first and second tracks 26, 27 comprises open grooves extending into corresponding first and second surfaces 31, 32, respectively, from opposite directions. The first and second surfaces 31, 32 form the upper and lower edges of the drawers 24, 25 adjacent the upright interior surface 22. The third surface 33 is located in the upper surface of a recess 34 forming a hand grip for pulling out said drawer 24. In the example shown in Figure 2, the attachment devices 12, 13 are provided with accessories in the form of a bottle holder A1 and a litter bin A2, respectively.

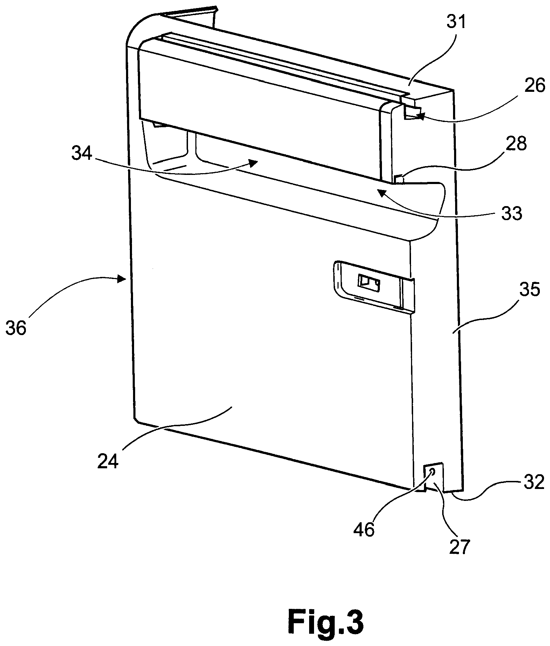

Figure 3 shows a perspective front view of a part of the attachment system 11 in Figure 2. The part is the front of one of drawers 24, wherein the relative locations of the three parallel tracks 26, 27, 28 and their respective surfaces 31, 32, 33 are indicated. An advantage of mounting an attachment device on the front of a drawer 24 is that one end of each of the parallel tracks 26, 27, 28 is arranged to be exposed when the drawer 24 is withdrawn. When a first side surface 35 of a drawer 24 is exposed, an interchangeable attachment device according to the invention can be mounted or removed. Consequently, the attachment device is prevented from being removed when the drawer 24 is pushed in. An opposite, second side surface 36 of the drawer 24 is arranged to block the parallel tracks 26, 27, 28. The adjacent drawer 25, shown in Figure 2, has different width than the first drawer 24 but has a front section with a track arrangement that is identical and mirrored. In this way, the parallel tracks 26, 27, 28 are all aligned when the drawers 24, 25 are in their closed positions. This arrangement allows an attachment device 12, 13 to be slidable along the front surface of the first drawer 24 and the adjacent drawer 25 when the drawers are in their closed positions.

Figure 4 shows a perspective rear view of the cooperation portions of one of the attachment system in Figure 2. Figure 4 shows an attachment device 12 with a bottle holder A1, as well as a side surface 35 of an associated drawer 24 with the parallel first, second and third tracks 26, 27, 28 indicated. The attachment device 12 comprises a first projection 41 for cooperating with said first track 26, a second projection 42 for cooperating with said second track 27 and a third projection 43 for cooperating with said third track 27. The first projection 41 is attached to an upper portion 45, the second projection 42 is attached to a lower portion 46 and the third projection 43 is attached to an intermediate part 48 on the rear surface of the front portion 18 of said attachment device 12. The respective upper, lower and front portions 45, 46, 18 are common to all attachment devices in the system. The attachment device 12 and its associated accessory A1 is arranged to be slidable in a horizontal direction along said upright interior surface of a drawer, as described above. In order to achieve this, the cooperating projections 41, 42, 43 and grooves forming the tracks 26, 27, 28 have cross-sections which are at least partially form fitting. The cooperating shapes of the tracks and projections are made with a tolerance or individual clearance that allows the attachment device to slide easily along the front of the upright surface. When placed in a desired position, the attachment device is retained by friction and a spring loaded device.

A spring loaded indexing device 44 comprising a resilient portion on an inner portion of the lower, second projection 42 is arranged in contact with a facing contact surface 45 in the corresponding groove of the second track 27. The contact surface 45 in the groove is provided with a number of locating elements 46 (see Figure 3), such as beads extending out of said surface. When the attachment device 12 is displaced into a desired position by a user, the spring loaded indexing device 44 is pulled past the locating elements 46. When located in said position, the attachment device 12 is prevented from being moved out of position by the interaction between the indexing device 44 and the adjacent locating elements 46. In this way the attachment device will remain in position when subjected to external forces, such as vibrations.

According to an alternative example, the locating elements can comprise depressions extending into said contact surface of the second track. In this case, the spring loaded indexing device would cooperate with such a depression to maintain the attachment device in position.

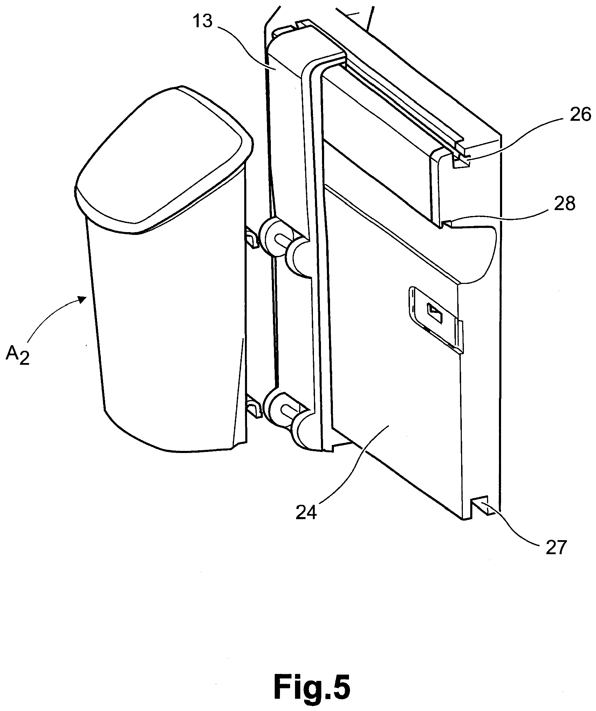

Figure 5 shows a perspective front view of an attachment system comprising an attachment device 13 with a replaceable accessory in the form of a litter bin A2, as shown in Figure 2. The litter bin A2 in Figure 5 is removably attached to the attachment device. An advantage of using removably attached accessories is that a single attachment device can be used for multiple, interchangeable accessories. In this way a separate attachment device is not required for each accessory. Also, the litter bin can be removed and emptied without having to remove the entire attachment device 13.

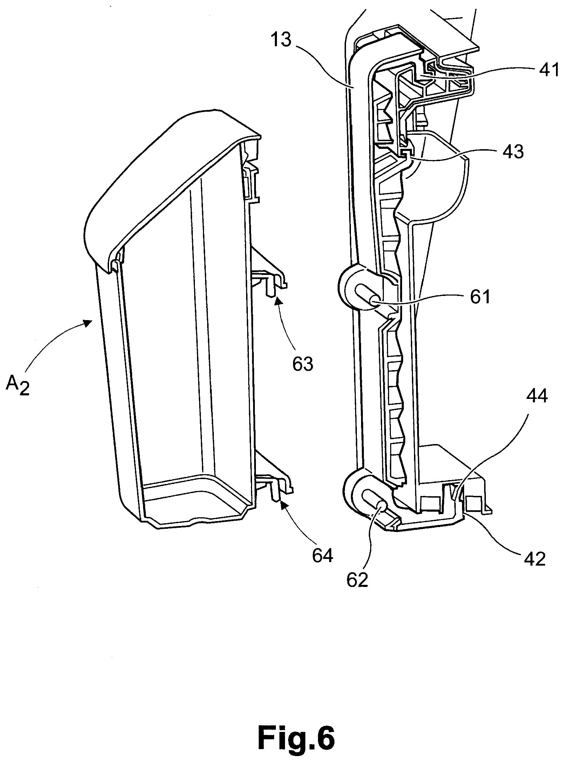

Figure 6 shows a cross-section through the attachment system in Figure 5 with the accessory removed. The attachment device 12 comprises a first projection 41 for cooperating with said first track 26, a second projection 42 for cooperating with said second track 27 and third projection 43 for cooperating with said third track 27 (tracks shown in Fig.5). The attachment device 12 and its associated accessory A1 is arranged to be slidable in a horizontal direction along said upright interior surface of a drawer 24, as described above. In order to achieve this, the cooperating projections 41, 42, 43 and grooves forming the tracks 26, 27, 28 have cross-sections which are at least partially form fitting.

The attachment device 13 is provided with fixtures are in the form of a first and a second attachment bar 61, 62, comprising a transverse, horizontal bar extending across a major portion of the width of the attachment device 13. In this example, the attachment bars 61, 62 have a circular cross-section and are mounted to the attachment device 13 in ears extending out of the front surface of the attachment device 13. The rear surface of the accessory A2 is provided with a first and a second snap-on means 63, 64, such as a pair of resilient clips, which can snap onto the respective attachment bars 61, 62. The retaining force of the snap-on means 63, 64 must be sufficient to retain the accessory A2 in position when subjected to collision forces.

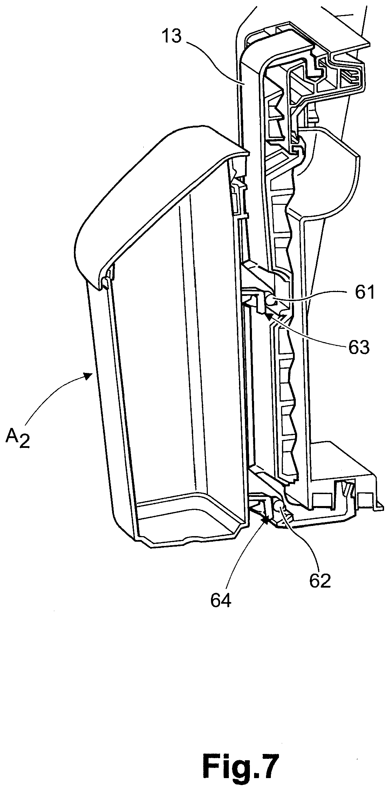

Figure 7 shows a cross-section through the attachment system in Figure 5 with the accessory attached. This figure shows the interaction between the attachment bars 61, 62 and the snap-on means 63, 64 when the accessory is in its mounted position.

As shown above, the accessories that can be fixedly or removably attached to the attachment device. An advantage of using removably attached accessories is that a single attachment device can be used for multiple, interchangeable accessories. In this way a separate attachment device is not required for each accessory. Also, a litter bin can be removed and emptied without having to remove the entire attachment device. The fixtures are not limited to the above example, but can be any form of suitable fixtures or attachment means. Hence the accessories can be attached by means of snap-on devices, quick-connect or bayonet devices, screws, etc. The fixtures can also be a permanent fixture moulded or glued onto the attachment device.

The invention is not limited to the above embodiments, but may be varied freely within the scope of the claims.

## Claims

1. An attachment system in a vehicle, which attachment system comprises interchangeable attachment devices (13) arranged to be removably mounted adjacent an upright interior surface (22) facing the passenger compartment, and each interchangeable attachment device (13) comprises a front portion (18, 19) arranged for supporting an accessory (A2) associated with the attachment device, wherein
- the attachment system comprises at least two spaced apart parallel tracks (26, 27, 28) each arranged in at least a first and a second surface (31, 32, 33) angled away from the upright interior surface (22) and a corresponding number of projections (41, 42, 43) arranged on each attachment device,
- a first and a second track (26, 27) comprises open grooves extending into said first and second surfaces (31, 32), respectively, from opposite directions,
- said attachment device (13) comprises at least a first projection (41) for cooperating with said first track (26) and at least a second projection (42) for cooperating with said second track (27),
wherein said attachment device (13) and its associated accessory (A2) is arranged to be slidable in a horizontal direction along said upright interior surface (22), and
wherein the accessory (A2) is removably attached to the attachment device (13) wherein the attachment system comprises a storage unit and the upright interior surface (22) comprises a front section of the storage unit.

2. An attachment system according to claim 1, wherein any one of the at least two spaced apart parallel tracks (26, 27, 28) is arranged behind the main extension of said upright interior surface (22).

3. An attachment system according to claim 1 or 2, wherein all spaced apart parallel tracks (26, 27, 28) are arranged to open up at at least one end, in a side surface (35) connecting said first and second surfaces (31, 32).

4. An attachment system according to claim 3, wherein the projections (41, 42, 43) on each interchangeable attachment device (13) in the attachment system are arranged to be slid into or out of the open ends of said parallel tracks (26, 27, 28), in order to mount or remove an attachment device (13) adjacent the upright interior surface (22).

5. An attachment system according to any one of claims 1-4, wherein the attachment system comprises interchangeable attachment devices (13) with said front portion (18, 19) extending in parallel with the upright interior surface (22) and comprising an upper portion (45), which supports the first projection (41), and at least one lower portion (46), which supports the second projection (42).

6. An attachment system according to claim 5, wherein the front portion comprises an intermediate portion (47) which supports a third projection (48) for cooperating with a third track (28) in a third surface (33) angled away from the upright interior surface (22).

7. An attachment system according to claim 6, wherein the first and a third track (26, 28) comprises open grooves extending into said first and a third surface (31, 33), respectively, from opposite directions.

8. An attachment system according to anyone of the preceding claims, wherein the storage unit comprises at least one drawer (24, 25).

9. An attachment system according to anyone of the preceding claims, wherein the storage unit comprises two adjacent drawers (24, 25).

10. An attachment system according to anyone of the preceding claims, wherein one end of each of the parallel tracks (26, 27, 28) is arranged to be exposed when one drawer (24, 25) is withdrawn, in order to allow said interchangeable attachment device (13) to be mounted or removed.

## Patentansprüche

1. Befestigungssystem in einem Fahrzeug, wobei das Befestigungssystem austauschbare Befestigungsvorrichtungen (13) umfasst, die derart angeordnet sind, dass sie angrenzend an eine dem Fahrgastraum zugewandte, aufrecht stehende Innenfläche (22) entfernbar angebracht sind, und jede austauschbare Befestigungsvorrichtung (13) einen Vorderabschnitt (18, 19) aufweist, der dazu ausgelegt ist, ein der Befestigungsvorrichtung zugeordnetes Zubehör (A2) zu halten, wobei
- das Befestigungssystem wenigstens zwei voneinander beabstandete parallele Schienen (26, 27, 28), die jeweils in wenigstens einer ersten und einer zweiten Oberfläche (31, 32, 33) angeordnet sind, die von der aufrechtstehenden Innenfläche (22) im Winkel wegstehen, und eine entsprechende Anzahl von Vorsprüngen (41, 42, 43) aufweist, die auf jeder Befestigungsvorrichtung angeordnet sind,
- eine erste und eine zweite Schiene (26, 27) offene Nuten aufweisen, die sich von entgegengesetzten Richtungen in die erste bzw. die zweite Oberfläche (31, 32) erstrecken,
- die Befestigungsvorrichtung (13) wenigstens einen ersten Vorsprung (41) zum Zusammenwirken mit der ersten Schiene (26) und wenigstens einen zweiten Vorsprung (42) zum Zusammenwirken mit der zweiten Schiene (27) aufweist,
wobei die Befestigungsvorrichtung (13) und ihr zugeordnetes Zubehör (A2) so ausgelegt ist, dass sie in einer horizontalen Richtung längs der aufrechtstehenden Innenoberfläche (22) verschiebbar ist, und
wobei das Zubehör (A2) lösbar an der Befestigungsvorrichtung (13) befestigt ist, wobei das Befestigungssystem eine Staueinheit aufweist und die aufrechtstehende Innenoberfläche (22) einen Vorderabschnitt der Staueinheit umfasst.

2. Befestigungssystem nach Anspruch 1, wobei irgendeine der wenigstens zwei voneinander beabstandeten parallelen Schienen (26, 27, 28) hinter der Haupterstreckung der aufrechtstehenden Innenoberfläche (22) angeordnet ist.

3. Befestigungssystem nach Anspruch 1 oder 2, wobei alle voneinander beabstandeten parallelen Schienen (26, 27, 28) derart angeordnet sind, dass sie sich zumindest an einem Ende in einer Seitenfläche (35) öffnen, die die erste und die zweite Oberfläche (31, 32) verbindet.

4. Befestigungssystem nach Anspruch 3, wobei die Vorsprünge (41, 42, 43) auf jeder austauschbaren Befestigungsvorrichtung (13) in dem Befestigungssystem so ausgelegt sind, dass sie in die offenen Enden der parallelen Schienen (26, 27, 28) hinein- oder aus ihnen herausgeschoben werden, um eine Befestigungsvorrichtung (13) angrenzend an die aufrechtstehende Innenoberfläche (22) anzubringen oder zu entfernen.

5. Befestigungssystem nach einem der Ansprüche 1-4, wobei das Befestigungssystem austauschbare Befestigungsvorrichtungen (13) aufweist, wobei sich der Vorderabschnitt (18, 19) parallel zu der aufrechtstehenden Innenoberfläche (22) erstreckt und einen oberen Abschnitt (45), der den ersten Vorsprung (41) trägt, und wenigstens einen unteren Abschnitt (46) aufweist, der den zweiten Vorsprung (42) trägt.

6. Befestigungssystem nach Anspruch 5, wobei der Vorderabschnitt einen Zwischenabschnitt (47) aufweist, der einen dritten Abschnitt (48) für ein Zusammenwirken mit einer dritten Schiene (28) in einer dritten Oberfläche (33) trägt, die von der aufrechtstehenden Innenoberfläche (22) im Winkel wegsteht.

7. Befestigungssystem nach Anspruch 6, wobei die erste und eine dritte Schiene (26, 28) offene Nuten aufweisen, die sich in die erste bzw. eine dritte Oberfläche (31, 33) von entgegengesetzten Richtungen erstrecken.

8. Befestigungssystem nach einem der vorhergehenden Ansprüche, wobei die Staueinheit wenigstens eine Schublade (24, 25) aufweist.

9. Befestigungssystem nach einem der vorhergehenden Ansprüche, wobei die Staueinheit zwei aneinander angrenzende Schubladen (24, 25) aufweist.

10. Befestigungssystem nach einem der vorhergehenden Ansprüche, wobei ein Ende jeder der parallelen Schienen (26, 27, 28) so ausgelegt ist, dass es freiliegt, wenn eine Schublade (24, 25) herausgenommen wird, um es zu erlauben, dass die austauschbare Befestigungsvorrichtung (13) angebracht oder entfernt wird.

## Revendications

1. Système de fixation dans un véhicule, lequel système de fixation comprend des dispositifs de fixation interchangeables (13) agencés pour être montés de manière amovible de façon adjacente à une surface intérieure verticale (22) faisant face à l'habitacle, et chaque dispositif de fixation interchangeable (13) comprend une partie avant (18, 19) agencée pour supporter un accessoire (A2) associé au dispositif de fixation, dans lequel
- le système de fixation comprend au moins deux voies parallèles écartées (26, 27, 28) agencées chacune dans au moins des première et deuxième surfaces (31, 32, 33) formant un angle par rapport à la surface intérieure verticale (22) et un nombre correspondant de saillies (41, 42, 43) agencées sur chaque dispositif de fixation,
- des première et deuxième voies (26, 27) comprennent des rainures ouvertes s'étendant dans lesdites première et deuxième surfaces (31, 32), respectivement, à partir de directions opposées,
- ledit dispositif de fixation (13) comprend au moins une première saillie (41) pour coopérer avec ladite première voie (26) et au moins une deuxième saillie (42) pour coopérer avec ladite deuxième voie (27),
dans lequel ledit dispositif de fixation (13) et son accessoire associé (A2) sont agencés pour pouvoir glisser dans une direction horizontale le long de ladite surface intérieure verticale (22), et
dans lequel l'accessoire (A2) est fixé de manière amovible sur le dispositif de fixation (13) où le système de fixation comprend une unité de stockage et la surface intérieure verticale (22) comprend une section avant de l'unité de stockage.

2. Système de fixation selon la revendication 1, dans lequel l'une quelconque des au moins deux voies parallèles écartées (26, 27, 28) est agencée derrière le prolongement principal de ladite surface intérieure verticale (22).

3. Système de fixation selon la revendication 1 ou 2, dans lequel toutes les voies parallèles écartées (26, 27, 28) sont agencées pour s'ouvrir au niveau d'au moins une extrémité, dans une surface latérale (35) reliant lesdites première et deuxième surfaces (31, 32).

4. Système de fixation selon la revendication 3, dans lequel les saillies (41, 42, 43) sur chaque dispositif de fixation interchangeable (13) dans le système de fixation sont agencées pour glisser dans ou hors des extrémités ouvertes desdites voies parallèles (26, 27, 28), afin de monter ou d'enlever un dispositif de fixation (13) de façon adjacente à la surface intérieure verticale (22).

5. Système de fixation selon l'une quelconque des revendications 1 à 4, dans lequel le système de fixation comprend des dispositifs de fixation interchangeables (13), ladite partie avant (18, 19) s'étendant parallèlement à la surface intérieure verticale (22) et comprenant une partie supérieure (45), qui supporte la première saillie (41), et au moins une partie inférieure (46), qui supporte la deuxième saillie (42).

6. Système de fixation selon la revendication 5, dans lequel la partie avant comprend une partie intermédiaire (47) qui supporte une troisième saillie (48) pour coopérer avec une troisième voie (28) dans une troisième surface (33) formant un angle par rapport à la surface intérieure verticale (22).

7. Système de fixation selon la revendication 6, dans lequel la première et une troisième voie (26, 28) comprennent des rainures ouvertes s'étendant dans ladite première et une troisième surface (31, 33), respectivement, à partir de directions opposées.

8. Système de fixation selon l'une quelconque des revendications précédentes, dans lequel l'unité de stockage comprend au moins un tiroir (24, 25).

9. Système de fixation selon l'une quelconque des revendications précédentes, dans lequel l'unité de stockage comprend deux tiroirs adjacents (24, 25).

10. Système de fixation selon l'une quelconque des revendications précédentes, dans lequel une extrémité de chacune des voies parallèles (26, 27, 28) est agencée pour être exposée lorsqu'un tiroir (24, 25) est retiré, afin de permettre de monter ou d'enlever ledit dispositif de fixation interchangeable (13).
